# EUROPEAN PATENT APPLICATION

(11) **EP 3 199 800 A1**
(43) Date of publication of application: **02.08.2017**
(21) Application number: 17153768.1
(22) Date of filing: 30.01.2017
(51) Int. Cl.: F03D 1/00, F03D 9/39, F03D 9/30, F03D 9/34

(54) **WIND POWER SYSTEM AND METHOD FOR EXTRACTING POWER FROM WIND**

(30) Priority: 28.01.2016 NL 2016182
(71) Applicant: Insidiamini Group B.V., 7701 SJ Dedemsvaart (NL)
(72) Inventor: Bijl, Jakob Koop, 7701 SJ Dedemsvaart (NL)
(74) Representative: V.O.

(57) **Abstract**

A wind power system is composed of a roof having an edge and a wind turbine having a rotor rotatable about a rotor axis. The rotor is mounted in a position horizontally spaced from the edge in a direction transverse to the edge, such that, if an airstream flows over the edge in said direction transverse to the edge, the rotor is located in a counter flow portion of a vortex downwind of the edge. The rotor has rotor blades shaped to be driven in rotational sense about the rotor axis by airflow in a direction parallel to said rotor axis. The rotor axis is oriented transverse to the edge of the roof. A method for extracting power from wind using such a wind turbine is also described.

## Description

### FIELD AND BACKGROUND OF THE INVENTION

The invention relates to a wind power system and to a method for extracting power from wind.

Wind energy or wind power is extracted from air flow, mostly using wind turbines. Wind power is very consistent from year to year but has significant variation over shorter time scales. One approach is to couple large wind parks into electrical power grids, so that in conjunction with other electric power sources, a reliable power supply can be ensured. However, the presence of a varying source has a negative effect on the efficiency and economy of costs of other sources and the network, which have to accommodate to the varying contribution and regional distribution of the wind power supply. Moreover, large wind parks are often regarded as having a negative impact on the quality of life by nearby residents and the visual quality of the landscape.

Therefore, small scale use of wind energy constitutes an interesting option for harvesting wind power, with relatively little impact on the members of the public not involved therein. However, when generating power from wind locally, the variability of the power supply constitutes an even more serious problem. In particular the span of time during which a minimum supply of power, which is needed to power functions that are preferably not switched off temporarily during periods of limited power supply, and that would therefore have to be powered from other sources, should be kept as small as possible. In small scale applications, this is more important than maximum yield during periods of strong wind.

From US 8 257 020 and DE 100 07 199, wind turbine systems are known that are specifically adapted to be arranged to leeward of an edge of roof in a vortex occurring when wind passes transversely over the edge of the roof. However, these systems are not suitable for operating in strong winds, in particular when designed for a high output when there is little wind.

### SUMMARY OF THE INVENTION

It is an object of the present invention to provide a solution that allows a particularly effective yield when generating wind power during calm periods, while allowing extraction of wind power even during in very strong wind, so that a particularly reliable supply of wind energy is achieved.

According to the invention, this object is achieved by providing a wind power system according to claim 1. The invention can also be embodied in a method for extracting power from wind according to claim 6.

In the position according to the invention the rotor is on the one hand exposed to an air stream in the vicinity of the roof edge during calm weather that is mostly concentrated as it crosses the edge, so that a relatively large power supply can be generated, even if there is very little wind. On the other hand, during periods of very strong wind, the rotor to leeward of the edge is substantially only exposed to counter flow of the vortex, so that it is exposed to a relatively moderate air flow. Thus, also during such conditions power can be generated without having to rely on complicated adjustment mechanisms that allow operation in high speed air flows. Such complicated adjustment mechanisms are typically not feasible in small scale systems.

Particular elaborations and embodiments of the invention are set forth in the dependent claims.

Further features, effects and details of the invention appear from the detailed description and the drawings.

### BRIEF DESCRIPTION OF THE DRAWINGS

Fig. 1 is a schematic side view of a building equipped with an example of a wind power system according to the invention;
Fig. 2 is a schematic top plan view of the building shown in Fig. 1, but with two of the wind turbines oriented in different directions; and
Fig. 3 is a schematic frontal view of the building shown in Fig. 2.

### DETAILED DESCRIPTION

An example of a wind power system according to the invention is described with reference to the drawings. The wind power system 1 according to the present example is composed of a roof 2 and six wind turbines 3. The roof 2 has an edge 5 and the wind turbines 3 each have a rotor 4 rotatable about a rotor axis 6. For converting motion of the rotor 4 into energy, each rotor 4 may for instance be equipped with magnets that pass along spools arranged in a sleeve 7 around the rotor 4 if the rotor 4 rotates about its rotor axis 5, so that currents in the spools are induced. However, other options for transferring power from the rotor are conceivable as well, such as a mechanical drive coupling the rotor to a dynamo or to apparatus mechanically driven by the rotor.

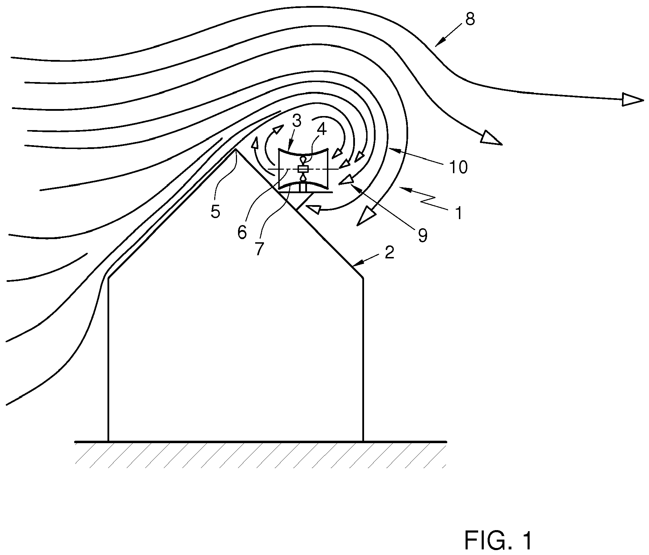

In Fig. 1, air flow resulting from wind is represented by a pattern of arrows 8. Each of the rotors 4 is mounted in a position horizontally spaced from the edge 5 in a direction perpendicular to the edge 5, such that, if an airstream flows over the edge 5 in the direction transverse, which may be perpendicular or obliquely, to the edge 5, the rotor 4 is located in a counter flow portion 9 of a vortex 10 downwind of the edge 5. The rotor 4 has rotor blades shaped to be driven in rotational sense about the rotor axis 6 by airflow in a direction parallel to the rotor axis 6 and the rotor axis 6 is oriented transverse, which may be perpendicular or obliquely, to the edge 5.

The rotors 4 are exposed to an air stream in the vicinity of the roof edge 5. The air stream is most concentrated as it crosses the edge 5, so that a relatively large power supply can be generated in the vicinity of the roof edge 5, even if there is very little wind. The flow driving the rotors 4 may be the counter flow 9 of the vortex 10, but it can also be a direct air flow if the wind direction is generally opposite to the direction shown in Fig. 1. In many areas, the wind direction tends to be quite variable in calm weather, while strong winds tend to be in a limited range of directions. Preferably, the wind turbine is positioned such that, during periods of very strong wind the rotors 4 are mostly located to leeward of the edge 5. In such a position, the rotors 4 are substantially only exposed to counter flow 9 of the vortex 10, so that they are exposed to a relatively moderate air flow. Thus, also during such conditions power can be generated without having to rely on complicated adjustment mechanisms that allow operation in high speed air flows. Such complicated adjustment mechanisms are typically not feasible in small scale systems.

To ensure that, when located downwind of the edge, the wind turbine is driven by the counter flow of the vortex, with little or no disturbance by direct air flow in the wind direction, the wind turbine is preferably arranged such that at least the axis of rotation of its propeller and more preferably the entire propeller is located at levels lower than the level of the edge.

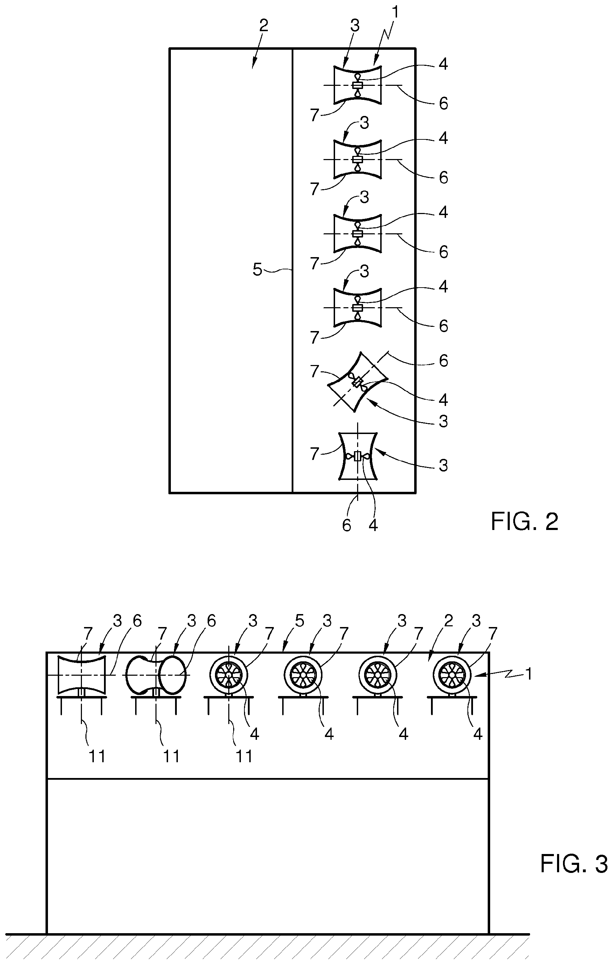

As is illustrated by positions of two wind turbines 3 at the bottom side of Fig. 2 and the left hand side of Fig. 3, the rotors 4 are suspended so that the orientations of the rotor axes 6 are steerable about a steering axis 11 perpendicular to the rotor axis 6 and to the edge 5.

The direction of air flow driving the rotors 4 is typically variable over time. In operation, the orientation of the rotor axes 6 is preferably steered about the steering axis 11 in accordance with the current direction of the air flow.

By changing the orientation of the rotor axes, the wind turbines 3 can be oriented for efficient conversion of wind energy in a wider range of wind directions.

Depending on the current direction of the wind, the air flow driving the rotors 4 may be part of the counter flow 9 of the vortex 10 as shown in Fig. 1 or oriented substantially in the direction of the wind if the current direction of the wind is such that the rotors 4 are temporarily not located within a counter flow of a vortex of the air flow over the edge 5 of the roof 2.

Thus, depending on the current wind direction, steering of the orientation of the rotor axes 6 of the wind turbines 3 may allow better use of a vortex caused by wind crossing the edge 5 at an oblique angle from windward of the edge 5 to leeward of the edge 5 where the wind turbines 3 are arranged. Such a vortex may be of a helical shape with a directional component in the direction of the edge 5 as well. Also, wind in a range of directions approaching the edge 5 from the side where the wind turbines 3 are located can be converted into power more efficiently by steering the rotor axes 6 accordingly.

For efficient use of both strong and light winds over longer periods of time, it is preferred that, in a geographical location with a prevailing average wind direction, in that average wind direction, the wind turbines 3 are arranged to leeward of the edge 5. Thus in strong winds, which tend to be more in the average wind direction than opposite thereto, the rotors 4 can operate in the counter flow 9 of the vortex 10, even in very strong winds.

Commonly, one of two methods is applied for determining an average wind direction. According to a first wind averaging technique, the average wind speed is the simple average of the observed wind directions (scalar mean wind direction). According to a second method, the average is a true vector average in which wind speed contributes to the average in the direction in which it is oriented. Since buildings are typically stationary for a long period of time, the average wind direction used is preferably a yearly average (i.e. disregarding seasonal influences), unless power generation by the wind turbine is relevant or most relevant during a particular period or part of the year only. Since the vector average of wind directions is determined to a larger extent influenced by the average direction of strong winds, the average wind direction in which the turbines 3 are to leeward of the edge 5 is preferably the vector average of wind directions.

Although the edge of the roof 2 may also be an edge of a flat roof or of a slanting roof with one panel only or a downwind edge of a wind deflector mounted to the roof to adjust or increase formation of a vortex to leeward of the edge, for instance on top of a curved roof, the roof is preferably a pitched roof covering a topmost portion of a building volume, the edge being a ridge 5 where slanting panels 12, 13 of the roof 2 meet. In the vicinity of the ridge 5 of such a roof 2, a particularly effective concentration of wind occurs and a vortex with a counter flow particularly suitable for driving rotors 4 of wind turbines 3 is generated. Also on such a roof, a deflector for increasing vortex formation may be provided.

The wind turbines 3 preferably each have a sleeve 7 in which the rotor 3 is arranged. Such sleeves canalize air flow into directions generally parallel to the rotor axis, so that the wind turbine becomes less sensitive to oscillations in the wind direction that typically occur relatively close to the ground as on roof tops.

## Claims

1. A wind power system comprising:
a roof having an edge; and
a wind turbine having a rotor rotatable about a rotor axis;
wherein the rotor is mounted in a position horizontally spaced from the edge in a direction transverse to the edge, such that, if an airstream flows over the edge in said direction transverse to the edge, the rotor is located in a counter flow portion of a vortex downwind of the edge;
the rotor has rotor blades shaped to be driven in rotational sense about the rotor axis by airflow in a direction parallel to said rotor axis; and
the rotor axis is oriented transverse to the edge.

2. A system according to claim 1, wherein the rotor is suspended so that the orientation of the rotor axis is steerable about a steering axis perpendicular to the rotor axis and the said edge.

3. A system according to claim 1 or 2, in a geographical location with a prevailing average wind direction and wherein, in said average wind direction, the wind turbine is to leeward of said edge.

4. A system according to any of the preceding claims, wherein the roof is a pitched roof covering a topmost portion of a building volume and the edge is a ridge where slanting panels the roof meet.

5. A system according to any of the preceding claims, further comprising a sleeve coaxial with the rotor axis, the rotor being rotatably suspended within the sleeve.

6. A method for extracting power from wind, the method comprising:
air flow in the form of wind driving a rotor of a wind turbine on a roof of a building, the rotor rotating about a rotor axis driven by air flow and providing energy, wherein:
the rotor is located within a counter flow of a vortex of the air flow over an edge of the roof in a position horizontally spaced from the edge in a direction transverse to the edge;
the rotor axis is oriented in a direction parallel to said air flow of the vortex driving the rotor; and
the rotor axis is oriented transverse to the edge.

7. A system according to claim 6, wherein said air flow driving the rotor is has a direction that is variable over time and wherein the orientation of the rotor axis is steered about a steering axis perpendicular to the rotor axis and said edge in accordance with a current direction of said air flow.

8. A method according to claim 7, wherein, depending on a current direction of the wind, said air flow driving the rotor is part of the counter flow of the vortex or oriented substantially in the direction of the wind if the current direction of the wind is such that the rotor is temporarily not located within a counter flow of a vortex of the air flow over the edge of the roof.

9. A method according to any of the claims 6-8, wherein, if wind is in a prevailing average wind direction, the wind turbine is to leeward of said edge.

10. A method according to any of the claims 6-9, wherein the roof is a pitched roof covering a topmost portion of a building volume and the edge is a ridge where slanting panels the roof meet.
